# EUROPÄISCHE PATENTSCHRIFT

(11) **EP 4 066 613 B1**
(45) Veröffentlichungstag und Bekanntmachung des Hinweises auf die Patenterteilung: **13.03.2024**
(21) Anmeldenummer: 22164371.1
(22) Anmeldetag: 25.03.2022
(51) Int. Cl.: A01C 15/00, A01C 15/12, A01C 15/18, A01C 19/02, A01C 17/00

(54) **STREUFAHRZEUG MIT VERSCHIEBBAREN STREUTELLERN**
SPREADING DEVICE WITH MOVABLE SPREADING DISCS
VÉHICULE D'ÉPANDAGE AVEC DISQUES D'ÉPANDAGE MOBILES

(30) Priorität: 31.03.2021 DE 102021108244
(43) Veröffentlichungstag der Anmeldung: 05.10.2022
(73) Patentinhaber: B. Strautmann & Söhne GmbH u. Co. KG, 49196 Bad Laer (DE)
(72) Erfinder: WEGMANN, geb. MALEWSKI, Benjamin, 49497 Mettingen (DE); OELGESCHLÄGER, Oliver, 49163 Bohmte (DE)
(74) Vertreter: Dr. Träger & Strautmann PAe PartG mbB

(56) Entgegenhaltungen:
- US-B1- 9 585 306
- US-B2- 7 044 408

## Beschreibung

Die Erfindung betrifft ein landwirtschaftliches Streufahrzeug zur Ausbringung von organischem Dünger und Kalk nach dem Oberbegriff des Anspruchs 1. Das Streufahrzeug umfasst einen Laderaum zur Aufnahme von Düngematerial mit zwei Seitenwänden, einer Stirnwand und einem Boden mit einer Transporteinrichtung. Weiterhin weist das Streufahrzeug eine Antriebseinrichtung für die Transporteinrichtung sowie ein Fahrgestell mit wenigstens einer Fahrzeugachse auf. Am Heck des Streufahrzeuges ist ein Streuwerk mit wenigstens zwei Streutellern zur Ausbringung des Düngematerials angebracht. Die Streuteller sind unterhalb einer hinteren Kante des Laderaumbodens angebracht, so dass das von der Transporteinrichtung Richtung Streuwerk geförderte Streugut über diese Kante gefördert wird und auf die im Arbeitseinsatz rotierenden Streuteller fällt und von diesen in Form eines Streuteppichs hinter dem Streufahrzeug ausgebracht wird.

Im Arbeitseinsatz wird ein solches Streufahrzeug häufig von einer Zugmaschine, beispielsweise einem Traktor, gezogen. Alternativ dazu kann es jedoch auch einen eigenen Antrieb aufweisen und eine selbstfahrende Arbeitsmaschine ausbilden.

Aus DE 197 32 788 A1 ist eine Vorrichtung zum Abgeben von Material bekannt. Die Vorrichtung umfasst eine zweigeteilte Fördereinrichtung mit einem zwischen den Fördereinrichtungen angeordneten Getriebetunnel. Eine spezielle Verteileinrichtung für das auszubringende Material ist nicht vorgesehen.

Aus DE 203 19 124 U1 ist eine Breitstreueinrichtung an einem Streufahrzeug bekannt. Die Breitstreueinrichtung umfasst ein Fräswerk mit zwei Fräswalzen und einem darunter angeordneten Tellerstreuwerk mit zwei Streutellern. Das Tellerstreuwerk ist um eine quer zur Fahrtrichtung angeordnete Schwenkachse zwischen einer ansteigenden Lage und einer abfallenden Lage schwenkbar. Zwar resultiert aus der Schwenkbewegung des Streutisches auch eine Veränderung des Streugut-Aufgabepunktes auf dem Streuteller in Fahrzeuglängsrichtung, jedoch ist die veränderte Position des Aufgabepunktes in Fahrzeuglängsrichtung im Hinblick auf seine Auswirkungen auf die Zentrifugalkraft, mit der das Streugut vom Streuteller weggeschleudert wird, vernachlässigbar klein. Vielmehr wird der Abwurfwinkel und damit die Ausprägung der Wurfparabel des Streugutes beeinflusst.

Aus DE 299 06 960 U1 ist eine Breitstreueinrichtung an einem Streufahrzeug bekannt, die ein Tellerstreuwerk mit vier Streutellern umfasst, wobei zwischen zwei größeren Streutellern zwei kleinere Streuteller angeordnet sind.

Aus US 9 585 306 B1 ist ein Düngerstreuer mit einem Zweiteller-Streuwerk bekannt. Der Streuer ermöglicht eine teilflächenspezifische Düngung unter Einbeziehung von GPS-Daten. Um die momentane Streumenge zu variieren, kann die Geschwindigkeit, mit der sich die Streuteller drehen, variiert werden.

Aus US 7 044 408 B2 ist ein Düngerstreuer mit einem Zweiteller-Streuwerk bekannt. Um eine Vielzahl von Materialien mit unterschiedlichen Eigenschaften gleichmäßig auf der Bodenoberfläche zu verteilen, weisen die Streuteller verstellbare Schleudereinheiten auf.

Aus DE 10 2017 120 048 A1 ist ein Streufahrzeug mit einem Zweiteller-Streuwerk bekannt, bei dem die Stellung der beiden Streuteller zueinander variabel ist. Die beiden Streuteller sind quer zur Fahrtrichtung nach außen geneigt, also jeweils nach außen ansteigend oder nach außen abfallend. Durch die seitliche Neigung der Streuteller wird das Streugut nicht waagerecht nach hinten und zur Seite gefördert. Bei einem zur Seite hin ansteigenden Streuteller wird das Streugut vielmehr bogenförmig abgeworfen.

Alternativ kann auch eine geringere Arbeitsbreite erreicht werden. Hierbei werden die Streuteller - quer zur Fahrtrichtung gesehen - nach unten geschwenkt, so dass sie zur Fahrzeugaußenkante hin abfallend geneigt sind. Auf diese Weise wird das Grenzstreuen an Feldrändern ermöglicht.

Weiterhin können Mittel zur individuellen Neigungseinstellung der Streuteller beziehungsweise der Drehebenen der Streuteller quer zur Fahrtrichtung vorgesehen sein.

Der konstruktive Aufwand für die Integration der genannten Schwenkeinrichtung ist relativ hoch.

Aufgabe der Erfindung ist es, die beschriebenen Nachteile zu beseitigen und ein Streufahrzeug vorzuschlagen, mit dem die Streubreite auf einfachere Art variierbar ist.

Diese Aufgabe wird gelöst durch ein Streufahrzeug mit den Merkmalen des Anspruchs 1. Definitionen:
Unter einem Streufahrzeug wird ein gezogenes oder selbstfahrendes Fahrzeug mit wenigstens einer Fahrzeugachse verstanden, das - im Gegensatz zu einem Kunstdünger oder Schleuderstreuer - zur Ausbringung von organischem Dünger und Kalk vorgesehen ist. Unter organischem Dünger werden Streugüter wie Kompost, Stallmist, Gärsubstrat, Bio-Klärschlämme etc. verstanden.

Unter einer Transporteinrichtung wird eine Einrichtung zum Transport des im Laderaum des Streufahrzeuges enthaltenen Streuguts verstanden. Eine Transporteinrichtung kann beispielsweise ein um den Boden des Laderaums umlaufendes Förderband oder ein sogenannter Kratzboden sein. Ein Kratzboden umfasst in der Regel zwei Kettensträngen, die jeweils von auf Wellen gelagerten Kettenrädern oder Taschenrädern bewegt werden. Auf den Ketten sind in regelmäßigen Abständen Mitnehmerleisten zur Beförderung des Streuguts angebracht. Eine Transporteinrichtung kann ein oder mehr Förderstränge umfassen. Die erfindungsgemäßen Streufahrzeuge umfassen wenigstens zwei Fördersträng e.

Unter einem Streuwerk wird ein Aggregat zur Verteilung von Streugut verstanden. Ein Streuwerk kann horizontale oder vertikale Streuwalzen aufweisen. Soweit horizontale Streuwalzen vorgesehen sind, kann unterhalb der Streuwalzen ein sogenanntes Breitstreuwerk, auch Tellerstreuwerk genannt, angeordnet sein. Das Tellerstreuwerk umfasst in der Regel zwei oder vier Teller mit darauf angebrachten Wurfschaufeln. Mit einem Tellerstreuwerk können Streubreiten von 20 Metern bis 30 Metern realisiert werden, wobei die ausgebrachte Streumenge sich ausgehend von der Mitte zu den Seiten hin reduziert. Die sich zu den Seiten hin reduzierenden Streumengen können durch eine überlappende Fahrweise ausgeglichen werden, so dass im Ergebnis eine weitgehend homogene Streugutverteilung auf einer Ackerparzelle möglich ist.

Unter einem Stauschieber wird eine vertikal verschiebbare Wand verstanden, die zwischen Laderaum und Streuwerk angebracht ist und nach unten hin durch den Förderboden des Streufahrzeuges begrenzt wird. Im Arbeitseinsatz muss der Stauschieber zumindest soweit angehoben werden, dass der Förderboden zumindest etwas Streugut unter dem Stauschieber hindurch Richtung Streuwerk fördern kann. Die Höhenposition des Stauschiebers definiert eine Stauschieberöffnungsweite, die einen unmittelbaren Einfluss auf die Menge an Streugut hat, die dem Streuwerk zugeführt wird.

Unter dem englischsprachigen Begriff Precision Farming wird ein Verfahren der ortsdifferenzierten und zielgerichteten Bewirtschaftung landwirtschaftlicher Nutzflächen verstanden. Ziel des "Präzisionsackerbaus" ist es dabei, die Unterschiede des Bodens und der Ertragsfähigkeit innerhalb eines Feldes zu berücksichtigen. Die Positionen der Bearbeitungsmaschinen werden auf den Flurstücken erfasst und die Maschinen wiederum erfassen und dokumentieren die Kennwerte (zum Beispiel Ertrag) schon während der Bearbeitung und/oder Ernte. Diese Daten werden dann ausgewertet und zu Applikationskarten weiterverarbeitet werden. Durch die Erstellung einer Applikationskarte kann die Sollwertmenge innerhalb eines Schlages je nach Bodenbeschaffenheit variieren. Eine Applikationskarte lässt sich über ein Bedienterminal, beispielsweise mittels eines USBsticks, in die Steuerung eines Streufahrzeuges einlesen und dort verarbeiten, so dass die mit dem Streufahrzeug durchzuführende Düngung darauf abstimmbar ist. Diese Bewirtschaftung wird *teilflächenspezifisch* genannt, da innerhalb eines großen Feldes (Schlag) die Auswirkungen unterschiedlicher Böden berücksichtigt werden können.

Unter einem Wiegesystem wird ein System zur Erfassung des auf einem Streufahrzeug momentan geladenen Streuguts verstanden. Vorzugsweise wird die Menge des Streuguts dynamisch erfasst und geregelt. Dies geschieht insbesondere, indem beim Ausbringen des Streugutes die Gewichtsabnahme erfasst und mit einer vordefinierten Soll-Ausbringmenge verglichen wird.

Als Streuwinkel wird ein Winkelbereich bezeichnet, innerhalb dessen ein Ackerboden mit von einem Streuwerk ausgebrachten Streugut beaufschlagt wird.

Bei dem erfindungsgemäßen Streufahrzeug sind die Streuteller des Streuwerks unterhalb einer hinteren Kante des Laderaumbodens angeordnet. Wenigstens ein Streuteller ist gegenüber der hinteren Kante des Laderaumbodens in Fahrzeuglängsrichtung nach vorne beziehungsweise hinten bewegbar, vorzugsweise verschiebbar. Im Gegensatz zu als Stand der Technik bekannten Streufahrzeugen, die einen schwenkbarem Streutisch zur Veränderung des Abwurfwinkels aufweisen, bewirkt ein Verschieben des Streutisches eine Veränderung des Streugut-Aufgabepunktes auf dem Streuteller. Durch den veränderten Aufgabepunkt ändert sich auch die auf das Streugut einwirkende Zentrifugalkraft, mittels derer das Streugut vom Streuteller weggeschleudert wird.

In einer ersten Ausführungsform erfolgt die Verschiebung des Streugut-Aufgabepunktes ohne Veränderung des Abwurfwinkels. Es kommt somit nicht zu einer Überlagerung unterschiedlicher Effekte durch gleichzeitiges Verschieben und Verschwenken des Streutellers bzw. Streutisches. Hierdurch reduziert sich die Komplexität der Steuerung zur Feinjustierung des Streubildes.

Der Rotations-Antrieb der Streuteller kann hydraulisch mittels geeigneter Motoren oder mechanisch mittels Gelenkwellen und/oder Getrieben erfolgen. Die Verlagerungsbewegung der Streuteller erfolgt vorzugsweise linear mit einem oder mehreren Hydraulikzylindern.

Wird ein Streuteller gegenüber der hinteren Kante des Laderaumbodens bewegt, so ändert sich auch der Bereich, in dem das Streugut auf diesen Streuteller fällt. Über eine kurze vertikale Strecke, die durch den Abstand von hinterer Kante zu Streuteller gebildet wird, bildet das Streugut einen vertikal fallenden Streugutstrom. Dieser Streugutstrom hat eine Mittelebene, deren Schnittlinie mit dem Streuteller eine Aufgabelinie des Streuguts auf dem jeweiligen Streuteller definiert.

Indem wenigstens ein Streuteller relativ zur hinteren Kante bewegt, vorzugsweise verschoben, wird ändert sich auch die Position der Aufgabelinie auf dem jeweiligen Streuteller. Durch eine Änderung der Aufgabelinie ändern sich die für die Ausbildung des Streubildes relevanten Wurfparameter des Streugutes. Insbesondere ist es durch eine Veränderung der Aufgabelinie eines Streutellers möglich, die Streubreite an eine Flurstückgrenze anzupassen. So können beispielsweise Uferrandstreifen beim Ausbringen des Streuguts berücksichtigt werden.

Das erfindungsgemäße Streufahrzeug umfasst weiterhin:
- eine Steuerungseinrichtung mit einem Datenspeicher, in welchem Werte für die Fördermenge je Förderstrang in Abhängigkeit von der jeweiligen Antriebsgeschwindikeit des Förderstrangs und/oder des Düngemittelmaterials hinterlegt sind,
- eine Wiegeeinrichtung zur kontinuierlichen, vorzugsweise dynamischen, Erfassung des Gewichts des im Laderaum befindlichen Düngematerials,
- eine Geschwindigkeitsmesseinrichtung zur Ermittlung einer Momentan-Fahrgeschwindigkeit des Streufahrzeuges oder eine Daten-Schnittstelle zur Übermittlung einer in einem das Streufahrzeug ziehenden Zugfahrzeugs gemessenen Momentangeschwindigkeit an die Steuerungseinrichtung.

Mittels der Steuerungseinrichtung wird hierdurch eine Ist-Ausbringmenge je Förderstrang bestimmt. Durch Änderung der Antriebsgeschwindigkeit der Förderstränge wird die Ist-Ausbringmenge je Förderstrang an eine Soll-Ausbringmenge je Förderstrang angepasst beziehungsweise geregelt. Vereinfacht gesagt ist ein Regelkreis zur kontinuierlichen Anpassung der Ist-Ausbringmenge an eine vordefinierte Soll-Ausbringmenge gebildet.

Alternativ oder ergänzend zu einer Bewegung eines einzelnen Streutellers kann vorgesehen sein, dass die Streuteller auf einem Streutisch angeordnet sind und der Streutisch insgesamt gegenüber der hinteren Kante des Laderaumbodens in Fahrzeuglängsrichtung nach vorne beziehungsweise hinten bewegbar, vorzugsweise verschiebbar ist.

Hierdurch lassen sich die Streuteller somit gemeinsam verschieben. Die Verstellung des Streutisches insgesamt ist beispielsweise über einen schubladenartigen Verschieberahmen, in dem der Streutisch gelagert ist, möglich. Eine gemeinsame Verschiebung der Streuteller mittels des Streutisches ist konstruktiv weniger aufwendig und damit kostengünstiger als eine Einzel-Verschiebung der Streuteller. Durch eine gemeinsame Verstellung der Streuteller ist es weiterhin möglich, die Streubreite insgesamt zu variieren und an die Fahrgassenabstände eines zu düngenden Flurstückes anzupassen.

Vorzugweise ist die Position des beweglichen Streutellers oder des beweglichen Streutisches insgesamt gegenüber der hinteren Kante des Laderaumbodens in Fahrzeuglängsrichtung stufenlos variierbar. Damit die veränderte Position eine im Arbeitseinsatz signifikante Auswirkung auf das Streubild hat, beträgt die Positionsverschiebung vorzugsweise mindestens 20 mm. Ist das Streuwerk also so eingerichtet, dass es um insgesamt 20 mm verschiebbar ist, lässt sich die Streugut-Aufgabelinien des Streuguts insgesamt - bzw. der Streugut-Aufgabepunkt eines einzelnen Streugut-Partikels - somit aus einer mittleren Nullstellung um 10 mm nach vorne bzw. 10 mm nach hinten verschieben. Um das Streubild stärker variieren und die Eigenschaften unterschiedliche Streugüter, wie deren spezifisches Gewicht und deren Flugeigenschaften, besser berücksichtigen zu können, beträgt der Verschiebeweg vorzugsweise mehr als 100 mm, höchst vorzugsweise mehr als 200 mm.

Nicht ausgeschlossen ist die Kombination eines verschiebbaren Streutisches mit einer Einzel-Verschiebeeinrichtung der Streuteller. Eine solche Kombinations-Einrichtung ist zwar konstruktiv aufwendig, erlaubt aber eine besonders individuelle Anpassung der Einstellung von Streutisch und Streutellern an die jeweiligen Anforderungen.

Ebenfalls nicht ausgeschlossen ist die Kombination eines verschiebbaren Streutisches mit einer Schwenkeinrichtung zur Variation des Abwurfwinkels. Die Verschiebung des Streutisches bewirkt eine Verschiebung des Streugut-Aufgabepunktes auf dem Streutisch und damit eine Veränderung der Streugut-Partikel-Geschwindigkeit beim Verlassen des Streutellers. Dahingegen bewirkt ein Verschwenken des Streutisches eine Veränderung des Abwurfwinkels und damit eine Beeinflussung der Wurfparabel der Streugut-Partikel. Durch eine Kombination der beiden Parameter lassen sich die Wechselwirkungen der Einflussgrößen "Aufgabepunkt" und "Abwurfwinkel" nutzen um beispielsweise ein besonders breites oder ein besonders schmales Streubild zu realisieren und eine Anpassung des Streubildes an Feldgrenzen, insbesondere Uferrandstreifen von Gewässern, zu ermöglichen.

Die Positionsverlagerung eines Streutellers und/oder des Streutisches ist auf unterschiedliche Art realisierbar. Besonders bevorzugt ist es, einen oder mehrere Hydraulikzylinder zur direkten Positionsverlagerung der Streuteller oder indirekten Positionsverlagerung der Streuteller mittels des Streutisches vorzusehen. Die Hydraulikzylinder lassen sich einfach in das in aller Regel am Streufahrzeug vorhandene Hydrauliksystem integrieren und sind den robusten Anforderungen im Arbeitseinsatz ohne weiteres gewachsen.

In einer bevorzugten Ausführungsform ist eine Sensoreinrichtung vorgesehen, mittels derer die Position der Streuteller und/oder des Streutisches relativ zur hinteren Kante des Laderaumbodens bestimmbar ist. Mit der Sensoreinrichtung lässt sich somit der Ist-Wert einer aktuellen Streuteller- und/oder Streutischeinstellung erfassen. Im zweiten Schritt kann dann die Verstellung von Streuteller und/oder Streutisch erfolgen, indem beispielsweise die aktuelle Einstellung in Richtung einer für eine bestimmte Düngesituation vordefinierte Voreinstellung verändert wird.

Vorzugsweise umfasst die Transporteinrichtung des Streufahrzeuges zwei oder mehr Förderstränge, die von einer am Streufahrzeug vorgesehenen Antriebseinrichtung vorzugsweise unabhängig voneinander und mit unterschiedlichen Geschwindigkeiten antreibbar sind.

Werden die Förderstränge mit unterschiedlichen Geschwindigkeiten angetrieben, so ist die Menge des dem Streuwerk zugeführten Streugutes über die Breite des Streufahrzeuges nicht konstant. Da das Streufahrzeug einen einzigen Laderaum hat, an dessen Boden die Förderstränge laufen und das Streugut im Arbeitseinsatz Richtung Streuwerk fördern, gibt es keine eindeutige Grenze zwischen den Streugut-Förderbereichen. Im Übergangsbereich zwischen zwei Fördersträngen kommt es vielmehr zu Mitnahmeeffekten. Unabhängig davon reduziert sich jedoch die Fördermenge in Richtung des Förderstrangs mit der geringeren Geschwindigkeit.

Da das Streuwerk im oberen Bereich wenigstens eine horizontale Walze aufweist, die das Streugut auflockert, zerkleinert und den unter der horizontalen Walze angeordneten Streutellern zuführt, wird der genannte Mitnahmeeffekt im Übergangsbereich und die sich zur Seite hin sukzessiv verändernde Streumenge im Ergebnis derart ausgeglichen, dass bei einem Zweiteller-Streuwerk dem einen Streuteller mehr Streugut zugeführt wird und dem anderen weniger. Die mit hoher Drehzahl rotierenden Streuteller beschleunigen die auf sie fallenden Streugutpartikel und werfen diese nach hinten und zum Teil auch in seitlicher Richtung ab. Beide Streuteller legen jeweils einen gleichmäßigen Streuteppich ab, wobei jedoch ein Streuteppich eines mit weniger Streugut beaufschlagten Streutellers eine geringe Masse pro m² aufweist, als ein Streuteppich eines mit mehr Streugut beaufschlagten Streutellers.

Bei gleichen Parametern, insbesondere gleicher Streuteller-Drehzahl und gleichem Streuwinkel, ergibt sich somit durch den mit weniger Streugut beaufschlagten Streuteller ein Streubereich mit einer reduzierten Streumasse pro m². Dieser Effekt lässt beispielsweise nutzen um Feldrandflächen, insbesondere an Gewässer angrenzende Feldrandflächen, weniger stark zu düngen. Hierdurch kann einerseits beispielsweise der Nitrateintrag in ein angrenzendes Gewässer reduziert und andererseits dennoch eine effektive Düngung zur Förderung des Pflanzenwachstums erzielt werden.

Andererseits ist es auch möglich, zusätzlich die Lage der Aufgabelinie eines oder mehrere Streuteller zu verschiebe um hierdurch das Streubild, insbesondere die Streubreite, zu beeinflussen. So lässt sich beispielsweise bei einem Streuteller, dem weniger Streugut zugeführt wird, gleichzeitig durch Veränderung der Aufgabelinie die Streubreite reduzieren. Der Effekt, dass bei weniger zugeführtem Streugut und konstant bleibenden sonstigen Parametern, insbesondere konstant bleibender Aufgabelinie, die ausgebrachte Streumenge pro m² reduziert wird, kann so kompensiert werden.

Im Ergebnis lässt sich der Streuteppich somit auf unterschiedliche Weise variieren und an die jeweiligen Anforderungen anpassen.

Vorzugsweise umfasst die Antriebseinrichtung je Förderstrang einen Einzelantrieb zum Antrieb einer für den jeweiligen Förderstrang vorgesehene Antriebswelle. Bei einem Streufahrzeug mit zwei Fördersträngen sind die Antriebswellen vorzugsweise einzeln gelagert und werden hydraulisch angetrieben.

Wenigstens ein Förderstrang kann eine Sensoreinrichtung zur Erfassung der Geschwindigkeit des Förderstrangs umfassen. Vorzugsweise weisen alle Förderstränge eine entsprechende Sensoreinrichtung auf, so dass die Geschwindigkeiten aller Förderstränge erfassbar sind. Die von den Sensoren ermittelten Daten werden an eine Steuerungseinrichtung des Streufahrzeuges übermittelt und dort weiterverarbeitet oder über beispielsweise über ein Display zur Anzeige gebracht. Die Geschwindigkeitsmesseinrichtung unterstützt den Fahrer bei der Anpassung einer Ist-Ausbringmenge an eine gewünschte Soll-Ausbringmenge. Beispielsweise wird dem Fahrer ermöglicht, sich bei der Einstellung der Transportbodengeschwindigkeit an bekannten Erfahrungswerten zu orientieren.

In einer weiteren bevorzugten Ausführungsform können die wenigstens zwei Streuteller mit unterschiedlichen Drehzahlen antreibbar sein. Durch die Veränderung der Drehzahl lässt sich die Abwurfgeschwindigkeit des Streuguts und damit die Streubreite variieren. Analog zu einer Veränderung des Aufgabepunktes stellt somit auch eine Streuteller-Drehzahlveränderung eine Möglichkeit zur Beeinflussung des Streubildes beziehungsweise zur Optimierung der Ausbringmenge, insbesondere im Bereich einer Feldgrenze, dar. Zur Erfassung der Streuteller-Drehzahl oder der Drehgeschwindigkeit kann einem oder mehreren Streutellern eine entsprechende Sensoreinrichtung zugeordnet sein.

Alternativ oder ergänzend kann das Streuwerk wenigstens eine verstellbare Grenzstreueinrichtung zur mechanischen Begrenzung eines Streuwinkels umfassen. Eine solche Grenzstreueinrichtung ist in den Wurfbereich des Streugutes einschwenkbar und bildet - im Gegensatz zu einer Streuweitenbegrenzung über die bereits genannten Einstellparameter wie Aufgabepunkt und Streutellerdrehzahl - eine Barriere für das Streugut. Hierdurch kann zusätzliche sichergestellt werden, dass beispielsweise einzelne im Streugut enthaltene Steine nicht über den vorgesehenen Streubereich hinaus, beispielsweise auf eine an das Feld angrenzende öffentlichen Straße, geschleudert werden und dort Schaden anrichten. Die Betätigung der Grenzstreueinrichtung erfolgt vorzugsweise mechanisch oder hydraulisch.

Die Grenzstreueinrichtung kann konstruktiv so ausgelegt und an das Streuwerk gekoppelt sein, dass sie in Form einer ja-nein-Information einen vordefinierten Auswurfbereich entweder freigibt oder verschließt. Beispielsweise kann eine planebene Grenzstreueinrichtung vorgesehen sein, die in Fahrzeuglängsrichtung ausgerichtet und in den Auswurfbereich einschwenkbar ist, um hierdurch sicherzustellen, dass kein Streugut zur Seite hin über die Breite des Streufahrzeuges ausgeworfen wird.

Alternativ dazu ist es aber auch möglich, eine Verstelleinrichtung vorzusehen, mittels derer zwischen Fahrzeuglängsachse und Grenzstreueinrichtung ein Auswurfwinkel einstellbar ist, so dass das Streugut beispielsweise in einem Winkel von 10° - bezogen auf die Fahrzeuglängsachse - über die Fahrzeugbreite hinaus ausgeworfen wird.

In einer bevorzugten Ausführung des Streufahrzeuges ist zwischen Laderaum und Streuwerk ein vorzugweise hydraulisch höhenverstellbarer Stauschieber zur Begrenzung der Menge des dem Streuwerk zugeführten Streuguts vorgesehen. Die Höhenposition des Stauschiebers ist mittels eines Sensors, beispielsweise eines Wegmesssensors bestimmbar. Der Stauschieber begrenzt die dem Streuwerk zugeführte Streumenge nicht nur, sondern egalisiert auch den Streugutstrom.

Ergänzend zu dem weiter oben genannten Regelkreis kann das Streufahrzeug eine Positionserfassungseinrichtung, beispielsweise ein GPS-System oder eine Daten-Schnittstelle zur Übermittlung einer in einem das Streufahrzeug ziehenden Zugfahrzeug gemessenen momentanen Ortsposition, umfassen. Hierdurch wird ermöglicht, dass die Steuerungseinrichtung auf Basis der
- von der Positionserfassungseinrichtung,
- von der Wiegeeinrichtung und
- von der Geschwindigkeitsmesseinrichtung - beziehungsweise der über die Daten-Schnittstelle an die Steuerungseinrichtung übermittelten Geschwindigkeitsdaten - die Antriebsgeschwindigkeit der Förderstränge regelt. Eine pro Flächeneinheit ausgebrachte Ist-Düngermenge ist so an eine für diese Flächeneinheit vordefinierte Soll-Ausbringmenge anpassbar und eine zu düngende Fläche kann teilflächenspezifisch gedüngt werden.

Die variable Geschwindigkeitsanpassung der Förderstränge bildet das für das Streufahrzeug realisierte Precision-Farming-Konzept somit vorteilhaft weiter.

Weiterhin kann vorgesehen sein, dass die Steuerungseinrichtung bei der Anpassung der pro Flächeneinheit ausgebrachte Ist-Düngermenge an eine für diese Flächeneinheit vordefinierte Soll-Ausbringmenge nicht nur die Geschwindigkeit der Förderstränge regelt, sondern ergänzend oder alternativ
- die Drehzahl der Streuteller und/oder deren Position relativ zur hinteren Kante der Transporteinrichtung und/oder
- den Streuwinkel der wenigstens einen Grenzstreueinrichtung
- und oder die Höheneinstellung des Stauschiebers
   regelt.

Hierdurch erweitern sich die Möglichkeiten zur Optimierung des Streubildes und die Anpassungsmöglichkeiten.

Im Datenspeicher der Steuerungseinrichtung kann eine Produktdatenbank hinterlegt sein, in welcher Parameterkombinationen aus Fahrgeschwindigkeit und/oder Förderstrang-Antriebsgeschwindigkeit und/oder Streutellerdrehzahl und/oder Streutellerposition und/oder die Position der Grenzstreueinrichtung und/oder Stauschieberöffnungsweite für unterschiedliche Düngermaterialien vordefiniert sind. Mittels der Steuerungseinrichtung sind auf dieser Datenbasis bei Vorgabe eines vordefinierten Düngermaterials die genannten Parameter auf die für dieses Düngermaterial vordefinierten Parameterwerte einstellbar. Hierdurch wird die Bedienung besonders einfach, denn die Bedienperson muss die einzelnen Parameter nicht manuell einstellen oder vorwählen, sondern der Steuerung lediglich mitteilen, welches Streugut ausgebracht werden soll. Die Einstellung der Parameter selbst erfolgt dann automatisch.

Der Datenspeicher kann weiterhin eine Schnittstelle zur Verarbeitung extern übermittelter oder zu übermittelnder Daten aufweisen. Bei dieser Schnittstelle kann es sich beispielsweise eine USB-Schnittstelle oder eine Sende/Empfangseinheit zum drahtlos Ein- und/oder Auslesen von Daten in den Datenspeicher handeln. Mittels der Schnittstelle sind
- Steuerdaten von einem externen Leitsystem an die Steuerungseinrichtung des Streufahrzeuges und/oder
- von den Sensoren des landwirtschaftlichen Streufahrzeuges ermittelte Ist-Daten an das externe Leitsystem
   übermittelbar.

Somit wird einerseits die Steuerung des Streufahrzeuges von einer externen Leitstelle ermöglicht. Andererseits sind die von den Sensoren des Streufahrzeugs generierten Daten einfach an eine externe Leitstelle übermittelbar und können dort weiterverarbeitet, insbesondere in Precison-Farming-Gesamtkonzepte integriert, werden.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: zeigt ein Streufahrzeug in einer Seitenansicht;
- Fig. 2: zeigt das Streufahrzeug gemäß Fig. 1 in einer Ansicht von hinten;
- Fig. 3: zeigt den hinteren Teil des Streufahrzeuges in einer Draufsicht;
- Fig. 4: zeigt den hinteren Teil des Streufahrzeuges mit schematisch angedeuteten Grenzstreueinrichtungen;
- Fig. 5: zeigt einen Ausschnitt aus dem hinteren Teil des Streufahrzeuges in einer Draufsicht;
- Fig. 6: zeigt den hinteren Teil des Streufahrzeuges gemäß einer in Fig. 5 enthaltenen Schnittlinie A - A;
- Fig. 7a: zeigt eine schematische Darstellung eines zwei Streuteller umfassenden Streuwerkes in mit gegensinnig angetriebenen Streutellern;
- Fig. 7b: zeigt eine schematische Darstellung eines zwei Streuteller umfassenden Streuwerkes in mit gleichsinnig angetriebenen Streutellern;
- Fig. 7c: zeigt eine schematische Darstellung eines zwei Streuteller umfassenden Streuwerkes in mit stillgesetzten Streutellern.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in den Figuren dargestellte Anordnung des Streufahrzeuges beziehungsweise dessen Komponenten.

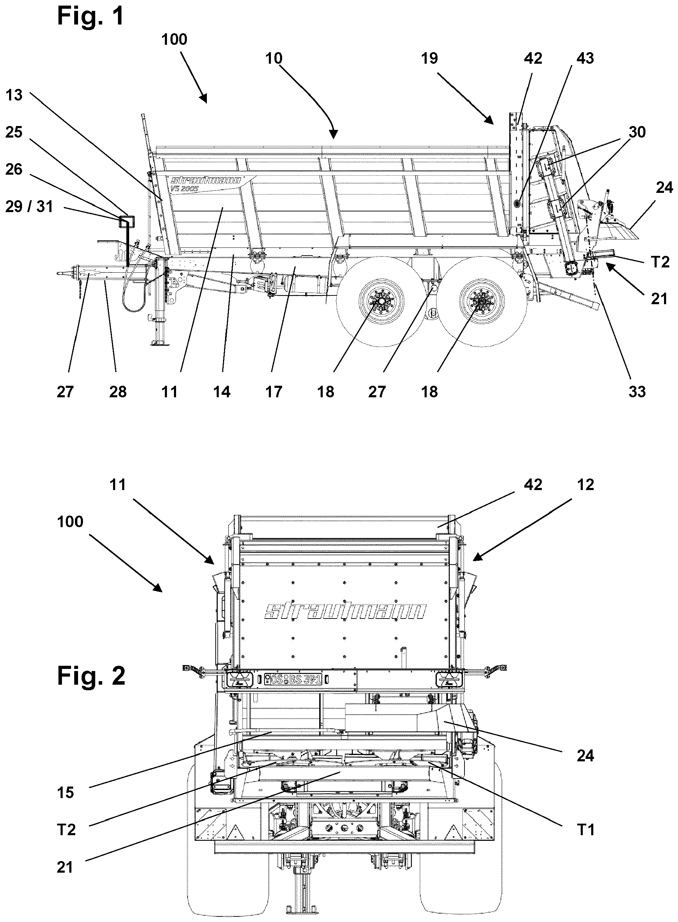

Die Figuren 1 und 2 zeigen ein als Stalldungstreuer ausgebildetes Streufahrzeug 100, das im Arbeitseinsatz von einem Zugfahrzeug, beispielsweise einem Traktor gezogen wird. Das Streufahrzeug 100 weist ein Fahrgestell 17 mit einer Deichsel 28 und zwei Achsen 18 auf. Auf dem Fahrgestell 17 befindet sich ein Laderaum 10 zur Aufnahme von auszubringendem Streugut 32. Der Laderaum 10 wird zu seinen Seiten hin durch eine Stirnwand 13, Seitenwände 11 und 12 sowie einen vor dem Streuwerk 19 befindlichen Stauschieber 42 begrenzt.

Der Laderaum 10 ist über eine Wiegeeinrichtung 27 an das Fahrgestell 17gekoppelt. Die Wiegeeinrichtung 27 erfasst somit das Eigengewicht des Laderaums 10 und der mit dem Laderaum 10 verbundenen Komponenten, insbesondere des Streuwerks 19. Wird ein so ausgestattetes Streufahrzeug 100 im unbeladenem Zustand auf Null tariert, so weist eine der Wiegeeinrichtung 27 zugeordnete Anzeigeeinrichtung nach der Beladung das Gewicht des Streuguts 32 aus. Als Gewichts-Anzeigeeinrichtung ist ein Display vorgesehen, welches im dargestellten Ausführungsbeispiel in eine Steuerungseinrichtung 25 integriert ist.

Die Steuerungseinrichtung 25 umfasst einen Datenspeicher 26 und Daten-Schnittstellen 29 und 31 auf, mittels derer Daten beispielsweise per USB-Stick und/oder drahtlos in die Steuerungseinrichtung 25 eingebbar und auslesbar sind. In der Steuerungseinrichtung oder einem zusätzlichen Gerät, beispielsweise einem mit der Steuerungseinrichtung über eine Leitung oder eine Funkverbindung gekoppelten Bediengerät, kann ein Display zur Eingabe von Steuerbefehlen vorgesehen sein.

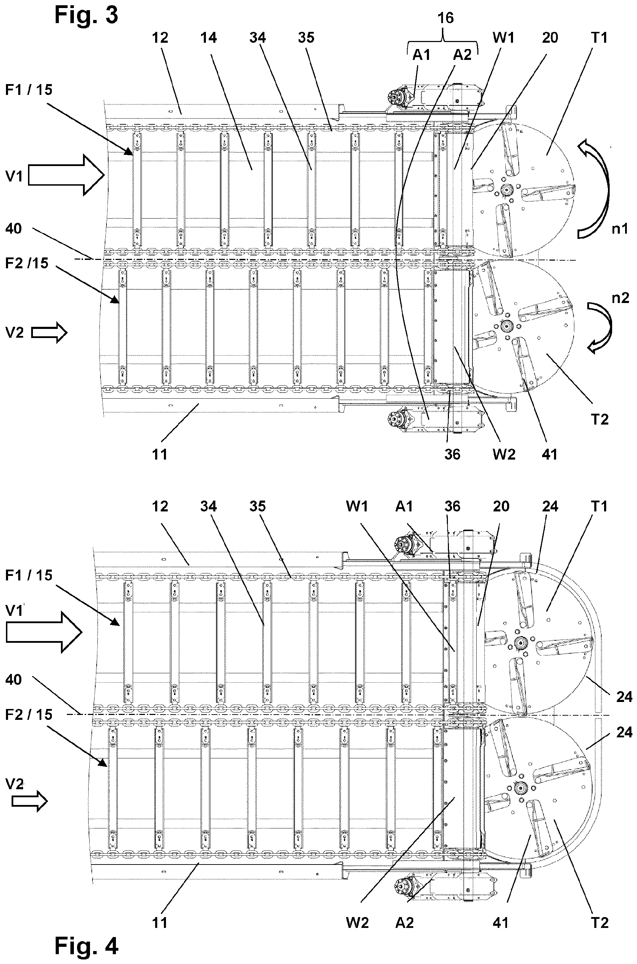

Der Laderaum 10 weist einen Boden 14 mit einer Transporteinrichtung 15 (vgl. Fig. 3) auf. Im dargestellten Ausführungsbeispiel umfasst die Transporteinrichtung 15 zwei Förderstränge F1 und F2, die durch den Boden 14 umlaufende Kratzböden gebildet werden. Die Transporteinrichtung 15 führt im Arbeitseinsatz das im Laderaum 10 befindliche Streugut 32 dem Streuwerk 19 zu. Dabei ist die Menge des dem Streuwerk 19 zugeführten Streuguts 32 von der Höheneinstellung des Stauschiebers 42 abhängig.

Das Streuwerk 19 umfasst zwei horizontal angeordnete Streuwalzen 30 sowie zwei Streuteller T1 und T2. Die Streuwalzen 30 zerkleinern und lösen das Streugut 32 auf, so dass es über eine am Boden 14 angeordnete hintere Kante 20 auf die Streuteller T1 und T2 fällt. Die Streuteller T1 und T2 sind auf einem Streutisch 21 angeordnet und rotieren im Arbeitseinsatz um einer vertikale oder gegenüber der vertikalen leicht geneigte Drehachse 33. Die Rotation der Streuteller T1 und T2 erfolgt je nach dem Anforderungsprofil an ein gewünschtes Streubild wahlweise im oder gegen den Uhrzeigesinn. Die rotierenden Streuteller T1, T2 beschleunigen das auf sie fallende Streugut 32, werfen es nach hinten ab und erzeugen hinter dem Streufahrzeug 100 einen Streuteppich. Die Breite und Dicke (kg/m²) ist durch Einstellung der insofern relevanten Streuparameter wie Förderstrang-Geschwindigkeit, Grenzstreueinrichtungs-Einstellung und Streuteller-Drehrichtung und - drehzahl regelbar ist.

Oberhalb des Streuteller T2 ist eine Grenzstreueinrichtung 24 angeordnet. Die Grenzstreueinrichtung 24 ist in den Auswurfbereich des Streutellers T2 einklappbar und ermöglicht eine mechanische Begrenzung des Streuwinkels β. Im dargestellten Ausführungsbeispiel ist lediglich dem Streuteller T1 eine Grenzstreueinrichtung 24 zugeordnet. Analog zum Streuteller T2 ist auch der Streuteller T2 mit einer Grenzstreueinrichtung 24 ausrüstbar. Alternativ zu der dargestellten Grenzstreueinrichtung 24, die einen Viertelkreis abdeckt, könnte auch eine anders ausgeführte Grenzstreueinrichtung vorgesehen sein. Beispielsweise könnte die Grenzstreueinrichtung in Form eines Leitblechs ausgeführt sein, welches den Streubereich auf einen vordefinierten, jedoch variabel einstellbaren, Auswurfwinkel begrenzt.

Die Figuren 3 und 4 zeigen eine Draufsicht auf den hinteren Bereich des Streufahrzeuges 100. Zur Verbesserung der Übersichtlichkeit sind die horizontalen Streuwalzen 30 und die Rahmen- und Schutzteile des Streuwerks 19 in den Figuren 3 und 4 nicht dargestellt.

Der Boden 14 wird im dargestellten Ausführungsbeispiel von zwei Fördersträngen F1 und F2, die gemeinsam die Transporteinrichtung 15 bilden, umlaufen. Die Förderstränge F1 und F2 sind als Kratzböden ausgeführt. Die Kratzböden werden in bekannter Weise durch Ketten 34 und die Ketten verbindende Förderleisten 35 gebildet.

Der Förderstrang F1 wird an seinem hinteren Ende, also im Bereich des Streuwerks 19 von einer Antriebswelle W1 und zwei darauf gelagerten Taschenkettenrädern 36 angetrieben. Die Antriebswelle W1 wird von einem Antrieb A1, bei dem es sich im dargestellten Ausführungsbeispiel um einen Hydraulikmotor handelt, angetrieben. Im vorderen Bereich des Streufahrzeuges 100, also im Bereich der Stirnwand 13, wird der Förderstrang F1 von einer in den Figuren nicht dargestellten Umlenkwelle um den Boden 14 geleitet.

Der Aufbau und der Antrieb des Förderstrangs F2 ist analog zu dem beschriebenen Aufbau und Antrieb des Förderstrangs F1 ausgeführt. Die beiden Antriebe A1 und A2 bilden gemeinsam eine Antriebseinrichtung 16 des Streufahrzeuges.

Die beiden Förderstränge F1 und F2 sind unabhängig voneinander und mit unterschiedlichen Geschwindigkeiten V1 und V2 antreibbar. Die unterschiedlichen Geschwindigkeiten V1, V2 sind in den Figuren 3 und 4 durch unterschiedlich groß dargestellte Pfeile graphisch angedeutet.

Im dargestellten Ausführungsbeispiel sind auch die Streuteller T1 und T2 einzeln und mit unterschiedlichen Drehzahlen n1 und n2 - und damit auch mit unterschiedlichen Drehgeschwindigkeiten - antreibbar.

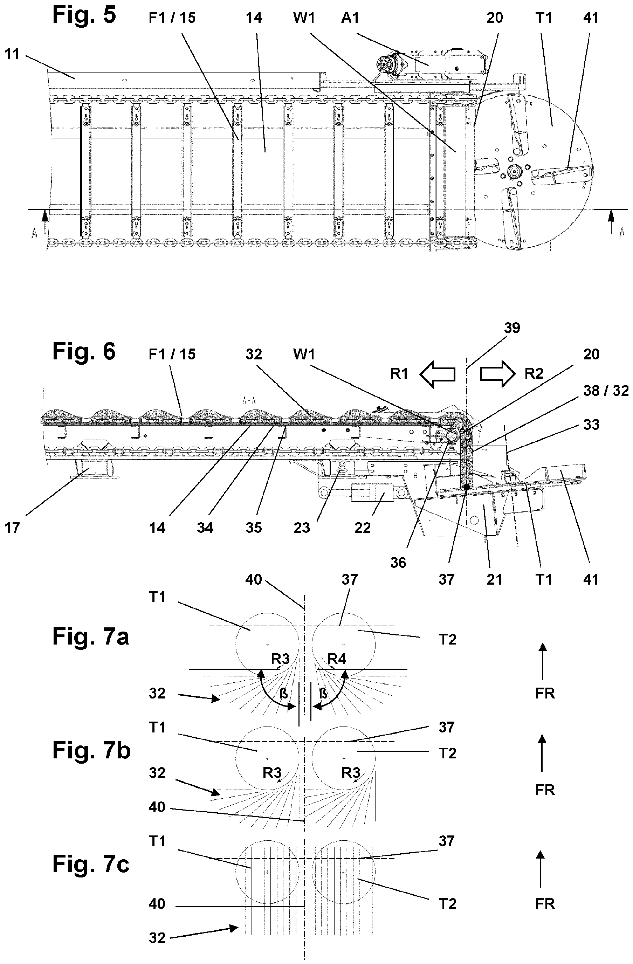

Wie in den Figuren 3 bis 6 gut erkennbar, überragt der Boden 14 die Streuteller T1 und T2 teilweise. Das von den Fördersträngen F1 und F2 in Richtung Streuwerk 19 geförderte Streugut 32 bildet einen Streugutstrom 38, welcher über die hintere Kante 20 des Bodens 14 von oben auf die Streuteller T1 und T2 fällt (vgl. Fig. 6). Der auf die Streuteller T1 und T2 fallende Streugutstrom 38 weist eine Mittelebene 39 auf. Die Kontaktlinie von Mittelebene 39 und der Ebene von Streuteller T1 und/oder Streuteller T2 wird als Aufgabelinie 37 bezeichnet.

Bei dem in Fig. 3 dargestellten Ausführungsbeispiel ist die Drehrichtung der Streuteller T1 und T2 entgegengesetzt zueinander und jeweils nach außen gerichtet. Da die Geschwindigkeit V2 des Förderstranges F2 und auch die Drehzahl n2 des Streutellers T2 kleiner sind als die Fördergeschwindigkeit F1 beziehungsweise die Drehzahl n1, ist ein so erzeugtes Streubild in Fahrtrichtung des Streufahrzeuges 100 gesehen asymmetrisch zu einer durch das Streufahrzeuges 100 verlaufenden Längsachse 40. Handelt es sich bei der für den Förderstrang F1 und den Streuteller T1 gewählten Einstellung um eine für ein größeres Flurstück vorgewählte Standard-Einstellung, so überlappt das durch den Streuteller T1 erzeugte Streubild das Streubild einer vorangegangen Parallelfahrt in der üblichen Weise. Dahingegen erzeugt der Streuteller T2 auf Grund der geringeren Menge an zugeführtem Streugut und der geringeren Drehzahl n2 einen schmaleren Streuteppich. Der einseitig schmalere Streuteppich ist für das Grenzstreuen einsetzbar. Dabei ist es auch möglich, die Streuparameter dynamisch anzupassen und bei einem keilförmig schmaler werdenden Flurstück den Streuteppich zur Grenzseite hin kontinuierlich schmaler werden zu lassen.

Bei der Darstellung gemäß Figur 4 sind oberhalb des Streuteller T1 und T2 angeordnete Grenzstreueinrichtungen 24 schematisch angedeutet. Im dargestellten Beispiel befinden sich die Grenzstreueinrichtungen 24 in einer Transportstellung und blockieren den Auswurfbereich der Streuteller T1 und T2. Die Grenzstreueinrichtungen 24 sind unabhängig voneinander in den Auswurfbereich der Streuteller T1, T2 ein- und ausschwenkbar. Alternativ zu der dargestellten, im Wesentlichen viertelkreisförmigen Kontur, können die Grenzstreueinrichtungen 24 auch einen kleineren Winkelbereich umschließen oder gestreckt und im Wesentlichen parallel zu den Seitenwänden 11 und 12 ausgerichtet sein.

Figur 5 zeigt einen Teilbereich des Streufahrzeuges 100 gemäß Figur 3 und enthält eine in Fahrzeuglängsrichtung verlaufende Schnittlinie A-A.

Figur 6 zeigt den Schnitt A-A gemäß Figur 5. Der Förderstrang F1 umläuft den Boden 14. Die Förderleisten 35 befördern das auf dem Boden 14 im Laderaum 10 enthaltene Streugut 32 in Richtung R2 zum Streuwerk 19. Das Streugut 32 ist lediglich als Restmenge schematisch angedeutet. Tatsächlich füllt es den Laderaum 10 im voll beladenen Zustand des Streufahrzeuges 100 komplett aus. Der durch das Streugut 32 gebildete Streugutstrom 38 umfasst somit in der Regel nicht nur die dargestellten Restmengen, sondern auch das darüber liegende und bis zur Oberkante der Seitenwände 11 und 12 reichende Streugut 32. Unabhängig davon, wie hoch der Laderaum 10 mit Streugut 32 gefüllt ist, wird dieses Streugut 32 sukzessive dem Streuwerk 19 zugeführt. Soweit das Streufahrzeug 100 einen Stauschieber 42 aufweist, wird die Menge des dem Streuwerk 19 zugeführten Streuguts durch die Höheneinstellung des Stauschiebers begrenzt. Das Streugut bildet den Streugutstrom 38, der je nach Füllzustand des Laderaums 10 und der Geschwindigkeit V1 des Förderstrangs F1 mehr oder weniger massereich sein kann.

Der Streugutstrom 38 hat eine Mittelebene 39. Im dargestellten Ausführungsbeispiel sind die Streuteller T1 und T2 auf dem Streutisch 21 gelagert. Der Streutisch 21 ist insgesamt mittels eines Hydraulikzylinders 22 gegenüber der hinteren Kante 20 des Bodens 14 verschiebbar. Die jeweils momentane Position des Streutisches 21 wird überwacht, indem ein optischer Sensor 23, bei dem es sich beispielsweise um ein Wegmesssystem handeln kann, die Ausfahrlänge der Kolbenstange des Hydraulikzylinders 22 erfasst und an die Steuerungseinrichtung 25 übermittelt.

Bei einer Verschiebung des Streutisches 21 verschiebt sich auch die Aufgabelinie 37. Das Streugut 32, beziehungsweise der auf den Streutisch fallende Streugutteppich 38, wird von den Streutellern T1 und T2 und darauf angeordneten Wurfschaufeln 41 nach der Verlagerung der Aufgabelinie 37 anders erfasst, beschleunigt und ausgeworfen als vor der Verlagerung. Durch eine Verschiebung des Streutisches 21 und/oder der Streuteller T1, T2 lässt sich somit das Streubild beeinflussen und beispielsweise die Streubreite vergrößern oder verringern. Werden die übrigen Parameter, insbesondere die Geschwindigkeit V1, V2 der Förderstränge F1, F2 sowie die Drehzahlen n1, n2 der Streuteller T1, T2 konstant beibehalten, reduziert sich bei einer vergrößerten Streubreite die pro m² ausgebrachte Menge an Streugut 32. Umgekehrt erhöht sich die Menge pro m² bei schmalerer Streubreite.

Im dargestellten Ausführungsbeispiel ist der Streutisch insgesamt mittels des Hydraulikzylinders 22 verschiebbar. Alternativ oder ergänzend kann auch eine Vorrichtung zu einer Positionsverlagerung eines einzelne Streutellers T1, T2 vorgesehen sein.

Die Figuren 7a, 7b und 7c zeigen jeweils eine schematische Darstellung eines zwei Streuteller umfassenden Streuwerkes mit unterschiedlich angetriebenen Streutellern T1, T2 und den hieraus resultierenden Streubildern. In Fahrtrichtung FR des Streufahrzeuges gesehen fällt das Streugut 32 jeweils analog zu der in Fig. 6 gezeigten Weise im Bereich der Aufgabelinie 37 auf die Streuteller T1 und T2.

Bei der in Fig. 7a gezeigten gegenläufigen Antriebsweise wird das Streugut 32 entgegengesetzt zur Fahrtrichtung FR symmetrisch zur Längsachse 40 hinter dem Streufahrzeug 100 verteilt. Die Streu-Gesamtbreite kann je nach Streugut und Einstellung der Streuparameter beispielsweise 30 Meter betragen. Dabei reduziert sich die Ausbringmenge pro m² zu den Außenseiten hin. Dieser Effekt ist im praktischen Arbeitseinsatz durch eine überlappende Fahrweise zumindest weitgehend kompensierbar, so dass über ein zu düngendes Flurstück insgesamt mit weitgehend gleichen Ausbringmengen pro m² gedüngt werden kann.

Figur 7b symbolisiert ein Streuerfahrzeug 100, bei dem sich die Streuscheiben T1 und T2 in gleichsinniger Richtung drehen. Das Ergebnis ist eine asymmetrische Verteilung des Streugutes 32 in Bezug auf die Längsachse 40. Der Randbereich auf der Seite der umgesteuerten Streuscheibe 14b bleibt weitestgehend frei von Streugut.

Fig. 7c symbolisiert ein Streufahrzeug 100, bei dem beide Streuscheiben T1 und T2 stillgesetzt sind, sich also nicht drehen. Das Ergebnis ist eine gleichmäßig schmale Verteilung des Streuguts 32, deren Breite der Breite des Streufahrzeuges 100 entspricht und deren Ausbreitungsrichtung parallel zur Längsachse 40 des Streufahrzeuges 100 verläuft.

Die gezeigten Streubilder sind durch Änderung der Streuparameter in vielfältiger Form variierbar. Insbesondere ist es möglich, auf Basis von Test- oder Erfahrungswerten für unterschiedliche Streugüter und/oder unterschiedliche äußere Rahmenbedingungen (z.B.: Wind, Grenzstreuen) Vorgabewerte für die Streuparameter vorzudefinieren und diese im Datenspeicher 26 der Steuerungseinrichtung 25 zu speichern oder über eine Daten-Schnittstelle von einem externen Ort in die Steuerungseinrichtung 25 einzuspielen.

### Bezugszeichenliste

- 10: Laderaum
- 11: Seitenwand
- 12: Seitenwand
- 13: Stirnwand
- 14: Boden
- 15: Transporteinrichtung
- 16: Antriebseinrichtung
- 17: Fahrgestell
- 18: Achse
- 19: Streuwerk
- 20: hintere Kante (von 15)
- 21: Streutisch
- 22: Hydraulikzylinder
- 23: Sensoreinrichtung
- 24: Grenzstreueinrichtung
- 25: Steuerungseinrichtung
- 26: Datenspeicher
- 27: Wiegeeinrichtung
- 28: Deichsel
- 29: Daten-Schnittstelle
- 30: Streuwalze
- 31: Daten-Schnittstelle
- 32: Streugut
- 33: Drehachse (von T1, T2)
- 34: Kette
- 35: Förderleiste
- 36: Taschenkettenrad
- 37: Aufgabelinie
- 38: Streugutstrom
- 39: Mittelebene (von 38)
- 40: Längsachse (von 100)
- 41: Wurfschaufel
- 42: Stauschieber
- 43: Sensor (für 42)
- 100: Streufahrzeug

- A-A: Schnitt
- A1: Einzelantrieb
- A2: Einzelantrieb
- F1: Förderstrang
- F2: Förderstrang
- FR: Fahrtrichtung
- n1: Drehzahl (von T1)
- n2: Drehzahl (von T2)
- R1: Richtung
- R2: Richtung
- T1: Streuteller
- T2: Streuteller
- V1: Geschwindigkeit (von F1)
- V2: Geschwindigkeit (von (F2)
- W1: Antriebswelle (von F1)
- W2: Antriebswelle (von F2)

- ß: Streuwinkel

## Patentansprüche

1. Landwirtschaftliches Streufahrzeug (100) zur Ausbringung von organischem Dünger und Kalk umfassend:
- einen Laderaum (10) zur Aufnahme von Düngematerial, welcher zwei Seitenwände (11, 12), eine Stirnwand (13) und einen Boden (14) mit einer Transporteinrichtung (15) umfasst,
- eine Antriebseinrichtung (16) für die Transporteinrichtung (15),
- ein Fahrgestell (17) mit wenigstens einer Fahrzeugachse (18),
- ein heckseitig angebrachtes Streuwerk (19) mit wenigstens zwei Streutellern (T1, T2) zur Ausbringung des Düngematerials, wobei die Streuteller (T1, T2) unterhalb einer hinteren Kante (20) des Bodens (14) angeordnet sind,
wobei wenigstens ein Streuteller (T1, T2) gegenüber der hinteren Kante (20) der Transporteinrichtung (15) in eine Fahrzeuglängsrichtung (R1, R2) nach vorne und/oder hinten verschiebbar, ist und das Streufahrzeug (100) weiterhin umfasst:
- eine Steuerungseinrichtung (25) mit einem Datenspeicher (26), in welchem Werte für die Fördermenge je Förderstrang (F1, F2) in Abhängigkeit von der jeweiligen Antriebsgeschwindikeit (V1, V2) des Förderstrangs und/oder des Düngemittelmaterials hinterlegt sind, **dadurch gekennzeichnet, dass** das Streufahrzeug (100) weiterhin umfasst:
- eine Wiegeeinrichtung (27) zur kontinuierlichen Erfassung des Gewichts des im Laderaum (10) befindlichen Düngematerials, und
- eine Geschwindigkeitsmesseinrichtung zur Ermittlung einer Momentan-Fahrgeschwindigkeit des Streufahrzeugs (100) und/oder eine Daten-Schnittstelle (29) zur Übermittlung einer in einem das Streufahrzeug (100) ziehenden Zugfahrzeug gemessenen Momentangeschwindigkeit an die Steuerungseinrichtung (25),
so dass auf Basis der Sensordaten von der Steuerungseinrichtung (25) eine Ist-Ausbringmenge je Förderstrang (F1, F2) bestimmt wird und durch Änderung der Antriebsgeschwindigkeit (V1) des Förderstrangs (F1) und/oder der Antriebsgeschwindigkeit (V2) des Förderstrangs (F2) die Ist-Ausbringmenge je Förderstrang (F1, F2) an eine Soll-Ausbringmenge je Förderstrang (F1, F2) angepasst wird.

2. Landwirtschaftliches Streufahrzeug (100) nach Anspruch 1, **dadurch gekennzeichnet, dass** die Streuteller (T1, T2) auf einem Streutisch (21) angeordnet sind und der Streutisch (21) gegenüber der hinteren Kante (20) des Bodens (14) in Fahrzeuglängsrichtung (R1, R2) nach vorne beziehungsweise hinten verschiebbar ist.

3. Landwirtschaftliches Streufahrzeug (100) nach Anspruch 1 oder 2, **dadurch gekennzeichnet, dass** ein oder mehrere Hydraulikzylinder (22), zur direkten Positionsverlagerung der Streuteller (T1, T2) oder indirekten Positionsverlagerung der Streuteller (T1, T2) mittels des Streutisches (21) vorgesehen sind.

4. Landwirtschaftliches Streufahrzeug (100) nach einem der Ansprüche 1 bis 3, **dadurch gekennzeichnet, dass** eine Sensoreinrichtung (23) vorgesehen ist, mittels derer die Position der Streuteller (T1, T2) und/oder des Streutisches (21) relativ zur hinteren Kante (20) des Bodens (14) bestimmbar ist.

5. Landwirtschaftliches Streufahrzeug (100) nach einem der Ansprüche 1 bis 4, **dadurch gekennzeichnet, dass** die Transporteinrichtung (15) zwei oder mehr unabhängig voneinander antreibbare Förderstränge (F1, F2, Fn) umfasst, so dass die Förderstränge (F1, F2, Fn) von der Antriebseinrichtung (16) mit unterschiedlichen Geschwindigkeiten (V1, V2, Vn) antreibbar sind.

6. Landwirtschaftliches Streufahrzeug (100) nach Anspruch 5, **dadurch gekennzeichnet, dass** die Antriebseinrichtung (16) je Förderstrang (F1, F2, Fn) einen Einzelantrieb (A1, A2, An) zum Antrieb einer für den jeweiligen Förderstrang (F1, F2, Fn) vorgesehene Antriebswelle (W1, W2, Wn) umfasst.

7. Landwirtschaftliches Streufahrzeug (100) nach einem der Ansprüche 5 oder 6, **dadurch gekennzeichnet, dass** wenigstens ein Förderstrang (F1, F2, Fn), vorzugsweise alle Förderstränge (F1, F2, Fn) eine Sensoreinrichtung zur Erfassung der Geschwindigkeit V1 und/oder V2 und/oder Vn umfasst.

8. Landwirtschaftliches Streufahrzeug (100) nach einem der Ansprüche 1 bis 7, **dadurch gekennzeichnet, dass** die wenigstens zwei Streuteller (T1, T2) mit unterschiedlichen Drehzahlen (n1, n2) antreibbar sind.

9. Landwirtschaftliches Streufahrzeug (100) nach einem der Ansprüche 1 bis 8, **dadurch gekennzeichnet, dass** das Streuwerk (19) wenigstens eine verstellbare Grenzstreueinrichtung (24) zur Begrenzung eines Auswurfwinkels (β) umfasst.

10. Landwirtschaftliches Streufahrzeug (100) nach einem der Ansprüche 1 bis 9, **dadurch gekennzeichnet, dass** zwischen Laderaum (10) und Streuwerk (19) ein höhenverstellbarer Stauschieber (42) zur Begrenzung der Menge des dem Streuwerk (19) zugeführten Streuguts (32) vorgesehen und die Position des Stauschiebers mittels eines Sensors (43) bestimmbar ist

11. Landwirtschaftliches Streufahrzeug (100) nach Anspruch 1, **dadurch gekennzeichnet, dass** das Streufahrzeug (100) eine Positionserfassungseinrichtung (30), beispielsweise ein GPS-System oder eine Daten-Schnittstelle (31) zur Übermittlung einer in einem den Streufahrzeug ziehenden Zugfahrzeug (200) gemessenen momentanen Ortsposition, umfasst, und die Steuerungseinrichtung (25) auf Basis der von:
- der Positionserfassungseinrichtung (30),
- der Wiegeeinrichtung (27) und
- der Geschwindigkeitsmesseinrichtung beziehungsweise der über die Daten-Schnittstelle (29) an die Steuerungseinrichtung (25) übermittelten Geschwindigkeitsdaten die Antriebsgeschwindigkeit (V1, V2) der Förderstränge (F1, F2) steuert, so dass eine pro Flächeneinheit ausgebrachte Ist-Düngermenge an eine für diese Flächeneinheit vordefinierte Soll-Ausbringmenge anpassbar und eine zu düngende Fläche teilflächenspezifisch mit Dünger beaufschlagbar ist.

12. Landwirtschaftliches Streufahrzeug (100) nach einem der Ansprüche 1 oder 11, **dadurch gekennzeichnet, dass** die Steuerungseinrichtung (25) bei der Anpassung der pro Flächeneinheit ausgebrachte Ist-Düngermenge an eine für diese Flächeneinheit vordefinierte Soll-Ausbringmenge
- die Geschwindigkeit der Förderstränge (F1, F2) und/oder
- die Drehzahl (n1, n2) der Streuteller (T1, T2) und/oder deren Position relativ zur hinteren Kante (20) der Transporteinrichtung (15) und/oder
- den Streuwinkel (β) der wenigstens einen Grenzstreueinrichtung (24) und/oder
- die Höheneinstellung des Stauschiebers (42)
regelt.

13. Landwirtschaftliches Streufahrzeug (100) nach Anspruch 1, 11 oder 12, **dadurch gekennzeichnet, dass** im Datenspeicher (26) der Steuerungseinrichtung (25) eine Produktdatenbank hinterlegt ist, in welcher Parameterkombinationen aus Fahrgeschwindigkeit und/oder Förderstrang-Antriebsgeschwindigkeit und/oder Streutellerdrehzahl und/oder Streutellerposition und/oder die Position der Grenzstreueinrichtung und/oder Stauschieberöffnungsweite für unterschiedliche Düngermaterialien vordefiniert sind und bei Vorgabe eines vordefinierten Düngermaterials die genannten Parameter auf die für dieses Düngermaterial vordefinierten Parameterwerte von der Steuerungseinrichtung (25) einstellbar sind.

14. Landwirtschaftliches Streufahrzeug (100) nach einem der Ansprüche Anspruch 1, 11, 12 oder 13, **dadurch gekennzeichnet, dass** der Datenspeicher (26) eine Schnittstelle zur Verarbeitung extern übermittelter oder zu übermittelnder Daten, beispielsweise eine USB-Schnittstelle oder eine Sende/Empfangseinheit zum drahtlos Ein- und/oder Auslesen von Daten in den Datenspeicher (26), umfasst, wobei über die Schnittstelle
- Steuerdaten von einem externen Leitsystem an die Steuerungseinrichtung (25) übermittelbar sind und/oder
- von den Sensoren des landwirtschaftlichen Streufahrzeuges (100) ermittelte Ist-Daten an das externe Leitsystem übermittelbar sind.

## Claims

1. Agricultural spreading vehicle (100) for spreading organic fertiliser and lime, comprising:
- a loading space (10) for receiving fertiliser material, which comprises two side walls (11, 12), an end wall (13) and a floor (14) with a transport device (15),
- a drive device (16) for the transport device (15),
- a chassis (17) with at least one vehicle axle (18),
- a rear-mounted spreading mechanism (19) with at least two spreading discs (T1, T2) for spreading the fertiliser material, wherein the spreading discs (T1, T2) are arranged below a rear edge (20) of the floor (14),
wherein at least one spreading disc (T1, T2) is displaceable forwards and/or backwards relative to the rear edge (20) of the transport device (15) in a longitudinal direction (R1, R2) of the vehicle and the spreading vehicle (100) further comprises
- a control device (25) with a data memory (26), in which values for the delivery quantity per delivery line (F1, F2) are stored as a function of the respective drive speed (V1, V2) of the delivery line and/or the fertiliser material,
**characterised in that** the spreading vehicle (100) further comprises
- a weighing device (27) for continuously recording the weight of the fertiliser material in the loading space (10), and
- a speed measuring device for determining an instantaneous travelling speed of the spreading vehicle (100) and/or a data interface (29) for transmitting an instantaneous speed measured in a towing vehicle pulling the spreading vehicle (100) to the control device (25),
so that an actual spread rate per conveyor line (F1, F2) is determined by the control device (25) on the basis of the sensor data and the actual spread rate per conveyor line (F1, F2) is determined by changing the drive speed (V1) of the conveyor line (F1) and/or the drive speed (V2) of the conveyor line (F2) to a target spread rate per conveyor line (F1, F2).

2. Agricultural spreading vehicle (100) according to claim 1, **characterised in that** the spreading discs (T1, T2) are arranged on a spreading table (21) and the spreading table (21) can be displaced forwards or backwards relative to the rear edge (20) of the ground (14) in the longitudinal direction (R1, R2) of the vehicle.

3. Agricultural spreading vehicle (100) according to claim 1 or 2, **characterised in that** one or more hydraulic cylinders (22) are provided for direct positional displacement of the spreading discs (T1, T2) or indirect positional displacement of the spreading discs (T1, T2) by means of the spreading table (21).

4. Agricultural spreading vehicle (100) according to one of claims 1 to 3, **characterised in that** a sensor device (23) is provided, by means of which the position of the spreading discs (T1, T2) and/or of the spreading table (21) relative to the rear edge (20) of the floor (14) can be determined.

5. Agricultural spreading vehicle (100) according to one of claims 1 to 4, **characterised in that** the transport device (15) comprises two or more independently drivable conveyor lines (F1, F2, Fn), so that the conveyor lines (F1, F2, Fn) can be driven by the drive device (16) at different speeds (V1, V2, Vn).

6. Agricultural spreading vehicle (100) according to claim 5, **characterised in that** the drive device (16) comprises an individual drive (A1, A2, An) for each conveyor line (F1, F2, Fn) for driving a drive shaft (W1, W2, Wn) provided for the respective conveyor line (F1, F2, Fn).

7. Agricultural spreading vehicle (100) according to one of claims 5 or 6, **characterised in that** at least one conveyor line (F1, F2, Fn), preferably all conveyor lines (F1, F2, Fn), comprises a sensor device for detecting the speed V1 and/or V2 and/or Vn.

8. Agricultural spreading vehicle (100) according to one of claims 1 to 7, **characterised in that** the at least two spreading discs (T1, T2) can be driven at different speeds (n1, n2).

9. Agricultural spreading vehicle (100) according to one of claims 1 to 8, **characterised in that** the spreading mechanism (19) comprises at least one adjustable boundary spreading device (24) for limiting a discharge angle (β).

10. Agricultural spreading vehicle (100) according to one of claims 1 to 9, **characterised in that** a height-adjustable filling piston (42) is provided between the loading space (10) and the spreading mechanism (19) for limiting the quantity of spreading material (32) fed to the spreading mechanism (19) and the position of the filling piston can be determined by means of a sensor (43)

11. Agricultural spreading vehicle (100) according to claim 1, **characterised in that** the spreading vehicle (100) comprises a position detection device (30), for example a GPS system or a data interface (31) for transmitting an instantaneous local position measured in a towing vehicle (200) towing the spreading vehicle, and the control device (25) controls on the basis of the speed data from:
- the position detection device (30),
- the weighing device (27) and
- the speed measuring device or transmitted to the control device (25) via the data interface (31)
the drive speed (V1, V2) of the conveyor lines (F1, F2) so that an actual fertiliser quantity applied per unit area can be adapted to a target application quantity predefined for this unit area and fertiliser can be applied to an area to be fertilised in a site-specific manner.

12. Agricultural spreading vehicle (100) according to one of claims 1 or 11, **characterised in that** the control device (25), when adjusting the actual quantity of fertiliser applied per unit area to a predefined target application quantity for this unit area controls
- the speed of the conveyor lines (F1, F2) and/or
- the speed (n1, n2) of the spreading discs (T1, T2) and/or their position relative to the rear edge (20) of the transport device (15) and/or
- the spreading angle (β) of the at least one boundary spreading device (24) and/or
- the height setting of the filling piston (42).

13. Agricultural spreading vehicle (100) according to claim 1, 11 or 12, **characterised in that** a product database is stored in the data memory (26) of the control device (25), in which parameter combinations of travelling speed and/or conveyor line drive speed and/or spreading disc speed and/or spreading disc position and/or the position of the boundary spreading device and/or filling piston opening width are predefined for different fertiliser materials and, when a predefined fertiliser material is specified, the said parameters can be set by the control device (25) to the parameter values predefined for this fertiliser material.

14. Agricultural spreading vehicle (100) according to one of claims 1, 11, 12 or 13, **characterised in that** the data memory (26) comprises an interface for processing externally transmitted data or data to be transmitted, for example a USB interface or a transmitter/receiver unit for wirelessly reading data into and/or out of the data memory (26), wherein via the interface.
- control data from an external control system can be transmitted to the control device (25) and/or
- actual data determined by the sensors of the agricultural spreading vehicle (100) can be transmitted to the external control system.

## Revendications

1. Véhicule d'épandage agricole (100) pour l'épandage d'engrais organiques et de chaux comprenant :
- un compartiment de chargement (10) pour recevoir de l'engrais, qui comprend deux parois latérales (11, 12), une paroi frontale (13) et un sol (14) avec un dispositif de transport (15),
- un dispositif d'entraînement (16) pour le dispositif de transport (15),
- un châssis (17) avec au moins un essieu de véhicule (18),
- un mécanisme d'épandage (19) monté à l'arrière avec au moins deux disques d'épandage (T1, T2) pour l'épandage de l'engrais, les disques d'épandage (T1, T2) étant disposés en dessous d'un bord arrière (20) du sol (14),
au moins un disque d'épandage (T1, T2) pouvant être déplacé vers l'avant et/ou vers l'arrière par rapport au bord arrière (20) du dispositif de transport (15) dans une direction longitudinale (R1, R2) du véhicule, et le véhicule d'épandage (100) comprenant en outre :
- un dispositif de commande (25) avec une mémoire de données (26) dans laquelle sont enregistrées des valeurs pour la quantité transportée par ligne de transport (F1, F2) en fonction de la vitesse d'entraînement respective (V1, V2) de la ligne de transport et/ou du matériau fertilisant,
**caractérisé en ce que** le véhicule d'épandage (100) comprend en outre :
- un dispositif de pesage (27) pour la saisie continue du poids du matériau fertilisant se trouvant dans le compartiment de chargement (10) et
- un dispositif de mesure de la vitesse pour déterminer une vitesse de déplacement instantanée du véhicule d'épandage (100) et/ou une interface de données (29) pour transmettre au dispositif de commande (25) une vitesse instantanée mesurée dans un véhicule tracteur tirant le véhicule d'épandage (100),
de sorte que, sur la base des données de capteur, le dispositif de commande (25) détermine un débit réel par ligne de transport (F1, F2) et, en modifiant la vitesse d'entraînement (V1) de la ligne de transport (F1) et/ou la vitesse d'entraînement (V2) de la ligne de transport (F2), détermine le débit réel par ligne de transport (F1, F2) à un débit de consigne par ligne de transport (F1, F2).

2. Véhicule d'épandage agricole (100) selon la revendication 1, **caractérisé en ce que** les disques d'épandage (T1, T2) sont disposés sur une table d'épandage (21) et **en ce que** la table d'épandage (21) peut être déplacée vers l'avant ou vers l'arrière par rapport au bord arrière (20) du sol (14) dans le sens longitudinal du véhicule (R1, R2).

3. Véhicule d'épandage agricole (100) selon la revendication 1 ou 2, **caractérisé en ce qu'**un ou plusieurs vérins hydrauliques (22) sont prévus pour le déplacement de position direct des disques d'épandage (T1, T2) ou le déplacement de position indirect des disques d'épandage (T1, T2) au moyen de la table d'épandage (21).

4. Véhicule d'épandage agricole (100) selon l'une des revendications 1 à 3, **caractérisé en ce qu'**il est prévu un dispositif de détection (23) au moyen duquel la position des disques d'épandage (T1, T2) et/ou de la table d'épandage (21) par rapport au bord arrière (20) du sol (14) peut être déterminée.

5. Véhicule d'épandage agricole (100) selon l'une des revendications 1 à 4, **caractérisé en ce que** le dispositif de transport (15) comprend deux ou plusieurs lignes de transport (F1, F2, Fn) pouvant être entraînées indépendamment les unes des autres, de sorte que les lignes de transport (F1, F2, Fn) peuvent être entraînées par le dispositif d'entraînement (16) à des vitesses différentes (V1, V2, Vn).

6. Véhicule d'épandage agricole (100) selon la revendication 5, **caractérisé en ce que** le dispositif d'entraînement (16) comprend pour chaque ligne de transport (F1, F2, Fn) un entraînement individuel (A1, A2, An) pour l'entraînement d'un arbre d'entraînement (W1, W2, Wn) prévu pour la ligne de transport respective (F1, F2, Fn).

7. Véhicule d'épandage agricole (100) selon l'une des revendications 5 ou 6, **caractérisé en ce qu'**au moins une ligne de transport (F1, F2, Fn), de préférence toutes les lignes de transport (F1, F2, Fn), comprend un dispositif de détection pour détecter la vitesse V1 et/ou V2 et/ou Vn.

8. Véhicule d'épandage agricole (100) selon l'une des revendications 1 à 7, **caractérisé en ce que** les au moins deux disques d'épandage (T1, T2) peuvent être entraînés à des vitesses de rotation différentes (n1, n2).

9. Véhicule d'épandage agricole (100) selon l'une des revendications 1 à 8, **caractérisé en ce que** le mécanisme d'épandage (19) comprend au moins un dispositif d'épandage limite (24) réglable pour limiter un angle d'éjection (β).

10. Véhicule d'épandage agricole (100) selon l'une des revendications 1 à 9, **caractérisé en ce qu'**il est prévu entre le compartiment de chargement (10) et le mécanisme d'épandage (19) un piston de refoulement (42) réglable en hauteur pour limiter la quantité de produit à épandre (32) amenée au mécanisme d'épandage (19) et **en ce que** la position du piston de refoulement peut être déterminée au moyen d'un capteur (43).

11. Véhicule d'épandage agricole (100) selon la revendication 1, **caractérisé en ce que** le véhicule d'épandage (100) comprend un dispositif de détection de position (30), par exemple un système GPS ou une interface de données (31) pour la transmission d'une position locale momentanée mesurée dans un véhicule tracteur (200) tirant le véhicule d'épandage, et le dispositif de commande (25) sur la base:
- du dispositif de détection de position (30),
- du dispositif de pesage (27) et
- du dispositif de mesure de la vitesse ou des données de vitesse transmises au dispositif de commande (25) via l'interface de données (31)
commande la vitesse d'entraînement (V1, V2) des lignes de transport (F1, F2), de sorte qu'une quantité réelle d'engrais épandue par unité de surface peut être adaptée à une quantité d'épandage de consigne prédéfinie pour cette unité de surface et qu'une surface à fertiliser peut être alimentée en engrais de manière spécifique à la surface partielle.

12. Véhicule d'épandage agricole (100) selon l'une des revendications 1 ou 11, **caractérisé en ce que** le dispositif de commande (25), lors de l'adaptation de la quantité réelle d'engrais épandue par unité de surface à une quantité d'épandage de consigne prédéfinie pour cette unité de surface, règle
- la vitesse des lignes de transport (F1, F2) et/ou
- la vitesse de rotation (n1, n2) des disques d'épandage (T1, T2) et/ou leur position par rapport au bord arrière (20) du dispositif de transport (15) et/ou
- l'angle d'épandage (β) de l'au moins un dispositif d'épandage en limite (24) et/ou
- le réglage en hauteur du piston de refoulement (42).

13. Véhicule d'épandage agricole (100) selon la revendication 1, 11 ou 12, **caractérisé en ce qu'**une base de données de produits est enregistrée dans la mémoire de données (26) du dispositif de commande (25), dans laquelle sont prédéfinies des combinaisons de paramètres de vitesse de déplacement et/ou de vitesse d'entraînement de la bande transporteuse et/ou de vitesse de rotation du disque d'épandage et/ou de position du disque d'épandage et/ou de position du dispositif d'épandage en limite et/ou de largeur d'ouverture du piston de refoulement pour différents matériaux fertilisants et, en cas d'indication d'un matériau fertilisant prédéfini, les paramètres mentionnés peuvent être réglés par le dispositif de commande (25) sur les valeurs de paramètres prédéfinies pour ce matériau fertilisant.

14. Véhicule d'épandage agricole (100) selon l'une des revendications 1, 11, 12 ou 13, **caractérisé en ce que** la mémoire de données (26) comprend une interface pour le traitement de données transmises ou à transmettre de l'extérieur, par exemple une interface USB ou une unité d'émission/réception pour l'entrée et/ou la lecture sans fil de données dans la mémoire de données (26), l'interface permettant
- des données de commande peuvent être transmises d'un système de gestion externe au dispositif de commande (25) et/ou
- des données réelles déterminées par les capteurs du véhicule d'épandage agricole (100) peuvent être transmises au système de commande externe.
